# EUROPEAN PATENT APPLICATION

(11) **EP 3 016 016 A1**
(43) Date of publication of application: **04.05.2016**
(21) Application number: 14275221.1
(22) Date of filing: 28.10.2014
(51) Int. Cl.: G06F 21/60, G06F 21/62, G06F 9/44, G06F 9/50

(54) **Automated deployment and securitization of model-based composite applications**

(71) Applicant: BRITISH TELECOMMUNICATIONS public limited company, London EC1A 7AJ (GB)
(72) Inventor: The designation of the inventor has not yet been filed
(74) Representative: Roberts, Scott Anthony

(57) **Abstract**

A computer implemented method of deploying a software application in a virtualised computing environment, the method comprising: receiving a description of the software application including an identification of a set of one or more application software resources; determining one or more types of security facility required for the set of application software resources and determining a security requirement for each of the determined types of security facility; selecting a security software resource for each of the determined types of security facility; determining a security configuration for each of the selected security software resources, the security configuration being based on a security requirement associated with a type of security facility for the security software resource; and generating a deployment specification for the software application specifying the application software resources and the security software resources for deployment of the application in the virtualised computing environment, each of the security software resources having associated the determined security configuration.

## Description

### Field of the Invention

The present invention relates to software application deployment. In particular it relates to the deployment of software applications with security resources in a virtualised computing environment.

### Background of the Invention

Historically, organisations and businesses developed or acquired bespoke or off-the-shelf software solutions for execution using dedicated computer hardware. Such software solutions find broad application in many varied areas of business such as: financial management; sales and order handling; record storage and management; human resource record management; payroll; marketing and advertising; internet presence etc. The acquisition, management and maintenance of such software and hardware can require costly investment in systems development, management and revision - functions that can extend beyond the core business concerns of an organisation.

As organisations increasingly seek to decouple such systems management from their core business processes to control costs, breadth of concern and liabilities, dedicated service offerings are provided to take the place of in-house systems. Computer systems are increasingly provided by third parties as services in the same way as utilities, a shift that has been partly facilitated by improvements in the availability of high-speed network connections allowing consuming businesses to access and use networked third party systems. Such systems can include substantially all aspects of a business computer system including hardware, operating systems software, file systems and data storage software including database applications and the like, middleware and transaction handling software, and commercial software. In this way consuming businesses can be relieved of concerns relating to the exact nature, arrangement and management of computing systems and focus resources elsewhere. The computing system is abstracted from the consuming business and can be logically thought of as a 'cloud' in which all system concerns are encapsulated and at least partly managed by a third party. Thus, such arrangements are known as 'cloud computing'.

Service providers can provide computing infrastructure on a service basis using hardware shared by multiple systems employing virtualisation software. Such services can be described as virtualised computing environments in which applications can be deployed to execute within virtual machines executing in the virtualised environment. Virtual machines can be managed by hypervisor software and the like.

Applications designers and systems integrators acting on behalf of a consuming business work with virtualised computing environments to describe specify and/or define a software application for deployment to the virtualised computing environment. For example, a virtualised computing environment can include an application definition facility, such as AppStack provided by AppCara Inc., with which an application designer works to describe a software application in terms of application software resources. Subsequently, an application description is used as the basis for generating an application deployment specification, such as a Puppet Script, to effect a deployment of the application to a virtualised computing environment.

The description and deployment of applications in this way requires application designers to include and integrate security provisions within their application descriptions so that security facilities can be deployed in a virtualised computing environment. This opens a possibility of error, omission or misconfiguration by an application designer, potentially leading to a security problem, exposure or flaw. It would be advantageous to address such shortcomings.

### Summary of the Invention

The present invention accordingly provides, in a first aspect, a computer implemented method of deploying a software application in a virtualised computing environment, the method comprising: receiving a description of the software application including an identification of a set of one or more application software resources; determining one or more types of security facility required for the set of application software resources and determining a security requirement for each of the determined types of security facility; selecting a security software resource for each of the determined types of security facility; determining a security configuration for each of the selected security software resources, the security configuration being based on a security requirement associated with a type of security facility for the security software resource; and generating a deployment specification for the software application specifying the application software resources and the security software resources for deployment of the application in the virtualised computing environment, each of the security software resources having associated the determined security configuration.

Thus, in this way a deployment specification is provided for deployment of a software application to a virtualised computing environment. The deployment specification includes deployment and configuration information for security software resources selected to implement security facilities required by software application components in a software application description. The required security facilities and associated security requirements are automatically determined based on the application description. Further, security software resources are automatically selected to satisfy security requirements for inclusion in the deployment specification. Thus a user specification, application description or deployment specification of a software application for deployment to a virtualised computing environment can be automatically supplemented by appropriately configured security software resources without burdening a user and with assurance of consistency of application of security software resources which satisfy user, organisational, virtualised computing environment or application requirements.

Preferably the method is performed by a proxy deployed between a user specifying the application and an application definition facility for a virtualised computing environment, the application definition facility providing the description of the software application, and wherein the receiving step comprises intercepting the description communicated between the application definition facility and the user.

Preferably the application definition facility is an application designer for the virtualised computing environment, the application designer including a registry of selectable application components for the software application.

Preferably the one or more types of security facilities is a set of more than one types of security facility, and the method further comprises optimising the set of security facilities by de-duplicating the set of security facilities and/or consolidating two or more security facilities in the set of security facilities.

Preferably the security software resources for each of the determined types of security facility constitute a set of security software resources, and the method further comprises optimising the set of security software resources by de-duplicating the set of security software resources and/or consolidating two or more security software resources in the set of security software resources.

Preferably the security configuration for an identified security software resource is generated automatically by a security service provider for the security software resource based on the associated security requirement.

Preferably the method further comprises providing the deployment specification to the virtualised computing environment to: a) instantiate the software application including the application software resources and the security software resources; and b) configure the security software resources in accordance with the security configuration determined for each of the security software resources.

The present invention accordingly provides, in a second aspect, a computer system arranged to deploy a software application in a virtualised computing environment comprising: an interface, whereby a description of a software application for deployment in a virtualised computing environment is received, the description including an identification of a set of one or more application software resources; a security requirement determiner arranged to determine one or more types of security facility required for the set of application software resources and to determine a security requirement for each of the determined types of security facility; a security software resource selector arranged to select a security software resource for each of the determined types of security facility; a security configuration determiner arranged to determine a security configuration for each of the selected security software resources, the security configuration being based on a security requirement associated with a type of security facility for the security software resource; and a deployment specification generator arranged to generate a deployment specification for the software application specifying the application software resources and the security software resources for deployment of the application in the virtualised computing environment, each of the security software resources having associated the determined security configuration.

The present invention accordingly provides, in a third aspect, a computer system arranged to deploy a software application in a virtualised computing environment comprising: an interface, whereby a description of a software application for deployment in a virtualised computing environment is received, the description including an identification of a set of one or more application software resources; a security requirement determiner arranged to determine one or more types of security facility required for the set of application software resources and to determine a security requirement for each of the determined types of security facility; a security software resource selector arranged to select a security software resource for each of the determined types of security facility; a security configuration determiner arranged to determine a security configuration for each of the selected security software resources, the security configuration being based on a security requirement associated with a type of security facility for the security software resource; and a deployment specification generator arranged to generate a deployment specification for the software application specifying the application software resources and the security software resources for deployment of the application in the virtualised computing environment, each of the security software resources having associated the determined security configuration.

The present invention accordingly provides, in a fourth aspect, a computer program element comprising computer program code to, when loaded into a computer system and executed thereon, cause the computer to perform the steps of the method set out above.

### Brief Description of the Drawings

A preferred embodiment of the present invention will now be described, by way of example only, with reference to the accompanying drawings, in which:
Figure 1 is a block diagram of a computer system suitable for the operation of embodiments of the present invention;
Figure 2 is a component diagram of computer system arranged to deploy a software application in a virtualised computing environment in accordance with embodiments of the present invention;
Figure 3 is an entity diagram illustrating exemplary associations between entities in accordance with embodiments of the present invention;
Figure 4 depicts an exemplary data structure defining relationship between application software resources and types of security facility in accordance with embodiments of the present invention;
Figure 5 illustrates relationships between types of security facility and security software resources in accordance with embodiments of the present invention; and
Figure 6 is a flow diagram illustrating a method of deploying a software application in a virtualised computing environment in accordance with embodiments of the present invention.

### Detailed Description of Embodiments

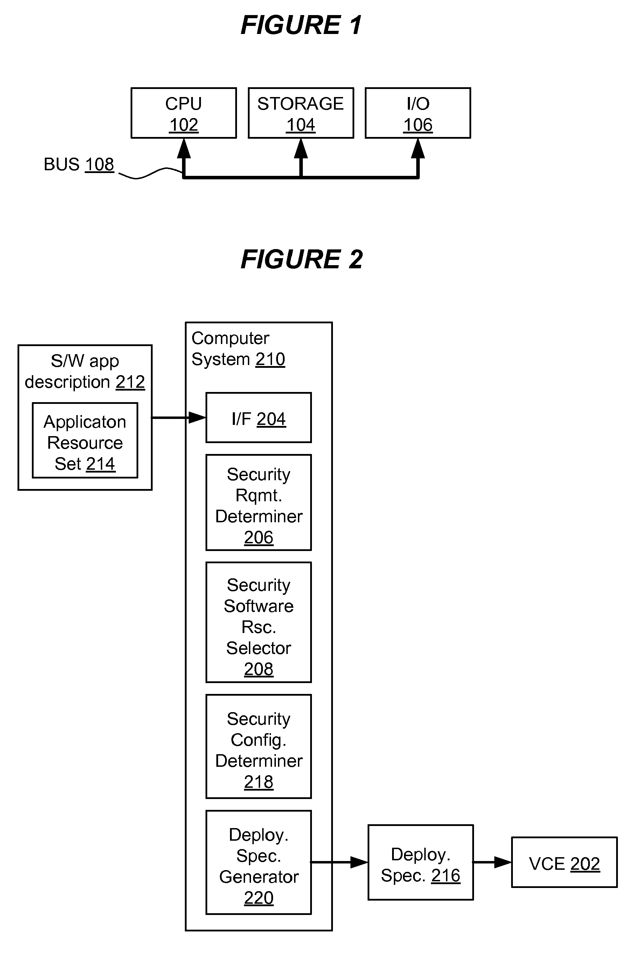

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of computer system 210 arranged to deploy a software application in a virtualised computing environment 202 in accordance with embodiments of the present invention. A virtualised computing environment 202 (VCE) is a virtualised computer system that includes one or more virtualised computing resources such as, inter alia, processor, storage, interface, input/output, networking, devices and other resources. For example, a virtual machine operating with a hypervisor is a VCE. Examples include VMWare virtual machines. The VCE 202 can be provided as a service-based technology such that the environment is delivered as a service for the installation and execution of a software application. In a preferred embodiment, the VCE 202 is provided as part of a Cloud Computing service provided by a Cloud Computing service provider such as BT Cloud Compute available from British Telecommunications plc.

The computer system 210 of Figure 2 can itself be implemented as a physical or virtual computing system and includes an interface 204 for receiving or otherwise accessing a software application description 212. The software application description 212 is a description of the constitution of a software application for deployment to the VCE 202. In particular the description 212 includes an identification of a set of one or more application software resources 214. An application software resource is a resource required in the VCE 202 for deployment of the software application. Application software resources include: operating system software; device drivers; services and facilities such as networking facilities; enterprise software such as business or business-specific software; storage facilities such as storage devices; databases; middleware software; runtime environments; applications software including user applications software such as office suites, spreadsheets, CAD/CAM, order processing software, enterprise application software and the like; server software including web servers, database servers, application servers, bespoke servers and the like; and other resources as will be apparent to those skilled in the art. The description 212 can be prepared and/or provided by a tool or facility for formulating application descriptions such as an application definition facility such as is provided by AppCara Inc. An application definition facility can include an application designer for designing, specifying or defining application requirements or arrangements for the VCE 202. For example, an application designer can include a registry, repository or database of selectable application components such as application resources for a software application. In one embodiment the software application description 212 further includes a description or specification of the arrangement and/or configuration of application resources for deployment of a software application. For example, an arrangement of a storage device including its accessibility, capacity, format, organisation and content can be described.

In one embodiment the application description 212 is suitable for conversion to a deployment specification for effecting the deployment of an application in the VCE 202. For example, a deployment specification can be a script, definition or other representation of the application software resources along with their arrangement and configuration for installation and configuration of resources in a virtual machine of the VCE 202. Examples of such deployment specifications include deployment descriptors, installation and configuration scripts or Puppet scripts (such as would be used with or by products of Puppet Labs). In one embodiment the application description 212 is converted to a deployment specification by a tool that reads the description 212 and generates a Puppet script or similar. In another embodiment, the application description 212 can constitute the deployment specification itself.

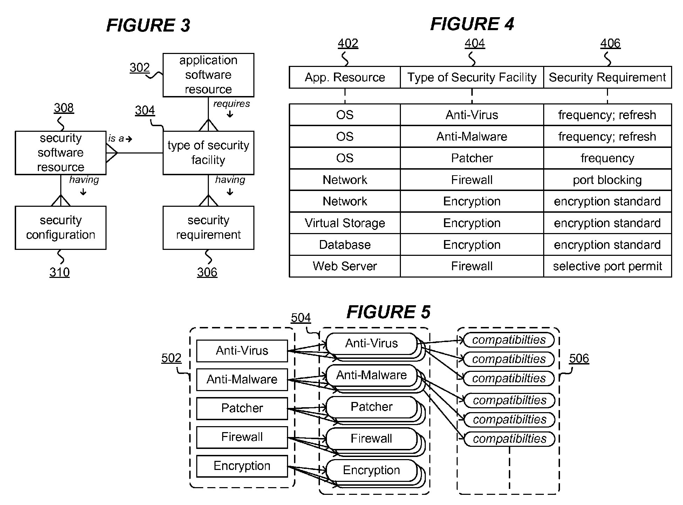

The computer system 210 further includes a security requirement determiner 206 as a software, hardware or firmware component adapted to determine one or more types of security facility, and a security requirement for each type of security facility, required for the application resource set 214. A type of security facility is a class, category or other generalisation of security facility suitable for reference with respect to disparate software application resources and disparate security software resources. Security software resources are particular software components providing security facilities. Examples of security software resources include, for example: a McAfee firewall product; a Symantec anti-virus product; a Trend Micro patch management product; and a Sophos data storage encryption product. Thus it can be seen that particular software components can constitute security software resources and each security software resource can belong to one or more types of security facility. For example, security software resources providing anti-virus facilities can belong to a type of security facility "Anti-Virus". The security requirement determiner 206 can determine one or more types of security facility for the application resource set 214 based on a definition of relationships between application software resources and types of security facility, as will be described below with respect to Figures 3 and 4.

The computer system 210 further includes a security software resource selector 208 as a software, hardware or firmware component adapted to select a security software resource for each of the determined types of security facility. Particular security software resources are selected to be compatible with an application software resource for which the type of security facility was determined. Further, security software resources can be prioritised, preferred or organised for selection according to a profile for the VCE 202, the particular software application (such as may be associated with the software application description 212) or a user. The determination of types of security requirement and the selection of security software resources will now be considered in more detail with reference to Figures 3, 4 and 5.

Figure 3 is an entity diagram illustrating exemplary associations between entities in accordance with embodiments of the present invention. The entities depicted in Figure 3 are conceptual and may be embodied in data structures, data bases, software libraries or the like in any particular implementation. Further, a particular embodiment of the entity relationships depicted in Figure 3 can be specific to an application or deployment, a VCE 202, a user or any combination of these. Thus, a VCE 202 may define particular entity relationships that are supported, available from, accessible to or provided by the VCE 202. Additionally or alternatively, a particular application for deployment may define, or have associated a definition of, entity relationships that are required for compliance or other reasons. According to the exemplary entity relationships of Figure 3, an application software resource 302 (such as may be included in a software application description 212) is associated with one or more types of security facility 304. The application software resource 302 can be said to 'require' such associated types of security facility 304. For example, an operating system application software resource may require an anti-virus security facility and an anti-malware security facility (notably types of facility, not particular anti-virus or anti-malware software). Each type of security facility 304 has associated one or more security requirements 306. It will be appreciated that, in the generalisation of the entity relationships of Figure 3, each type of security facility may have multiple security requirements. Thus, an anti-virus security facility may have a security requirement that an anti-virus scan is executed at a particular minimum frequency (hourly, daily etc.) Similarly, an encryption security facility may have a security requirement that one of a set of particular encryption algorithms is used, and a further security requirement that a particular minimum key length is employed.

The entity relationships also define that a security software resource 308 is a type of security facility 304, and each type of security facility 304 has associated one or more security software resources 308. For example, a McAfee firewall product is a security software resource 308 that is a type of firewall security facility. Further, each security software resource 308 has associated one or more security configurations 310. For example, a McAfee firewall product can have a configuration of which network ports are blocked.

Figure 4 depicts an exemplary data structure defining relationship between application software resources 402 and types of security facility 404 in accordance with embodiments of the present invention. The data structure is illustrated in a table though it will be appreciated that other data structures or combinations of data structures (such as, but not limited to, tables in a relational or object oriented database) may alternatively be used. The data structure of Figure 4 is associated with, stored by or accessible to the computer system 210, and in particular the security requirement determiner 206. The arrangement of the data structure of Figure 4 can be application specific, such as specific to one or a group of applications for which descriptions 212 are received by the interface 204, or alternatively the data structure can be defined to cover all applications processed by the computer system 210.

The data structure defines one or more types of security facility 404 for one or more application software resources 402. Additionally, by way of example, each association includes a definition of one or more security requirements 406. For example, the OS (operating system) application software resource requires three types of security facility: Anti-Virus; Anti-Malware; and a Patch Manager. The Anti-Virus type of facility has security requirements that it must execute at a particular frequency and must be refreshed. The Anti-Malware type of facility has security requirements that it must execute at a particular frequency and must be refreshed. The Patch Manager type of facility has a security requirement that it must be refreshed. In this way the data structure of Figure 4 is suitable for reference by the security requirement determiner 206 to determine one or more types of security facility for a set of application software resources, including a determination of security requirements for each type of security facility.

Figure 5 illustrates relationships between types of security facility 404 and security software resources 504 in accordance with embodiments of the present invention. The relationships of Figure 5 can be provided by way of a data structure or other suitable entity relationship mechanism such as relational or object oriented database. The relationships of Figure 5 are associated with, stored by or accessible to the computer system 210, and in particular the security software resource selector 208. The arrangement of the relationships of Figure 5 can be specific to the VCE 202 to reflect security software resources available in, accessible to or implementable by the VCE 202. Additionally, the relationships of Figure 5 can be application, user or consumer specific, such as specific to one or a group of applications for which descriptions 212 are received by the interface 204.

Each type of security facility in a set of types of security facility 404 is associated with one or more particular security software resources 504. The security software resources associated with a type of security facility provide the security services, functions, protections or facilities required by the type of security facility. Thus a number of anti-virus products are indicated associated with the anti-virus type of security facility. The security software resource selector 208 selects a particular security software resource from the set 504 to implement a type of security facility required for an application and identified by the security requirement determiner 206. In one embodiment, the selection by the security software resource selector 208 is made based on an assessment of compatibility between a particular security software resource and an application software resource for which the security software resource is to be selected. For example, where a Microsoft Windows OS application software resource requires an Anti-Virus type of security facility, the security software resource selector 208 selects an anti-virus product that is both: a type of Anti-Virus security facility; and is compatible with the Microsoft Windows OS application software resource.

Additionally or alternatively, the selection by the security software resource selector 208 is made based on an assessment of compatibility between security requirements supported or provided by a particular security software resource and security requirements required by a particular application software resource for which the security software resource is to be selected. For example, where a virtual storage device application software resource requires an Encryption type of security facility requiring Advanced Encryption Standard (AES) encryption, the security software resource selector 208 selects an encryption product that is both: a type of Encryption security facility; and provides AES encryption.

The determination of compatibility between security software resources and application software resources and/or security requirements can be provided by definitions of compatibilities 506 provided for each security software resource. Such compatibilities can indicate, for example and inter alia: application software resources with which a security software resource is compatible/incompatible; particular versions of application software resources with which a security software resource is compatible/incompatible; software configurations of application software resources with which a security software resource is compatible/incompatible; and particular security requirements which can be provided, supported and/or configured by a security software resource, etc.

Returning to Figure 2, the computer system 210 further includes a security configuration determiner 218 as a software, hardware or firmware component adapted to determine a security configuration for each of the selected security software resources. The security configuration can include, inter alia, settings, parameters, options, functions, features and other configuration information required for a security software resource to undertake its security function for a deployed application. For example, an encryption security software resource can be configured to define which encryption algorithm is to be used, which key length is to be employed, any encryption protocol to support and/or any particular encryption standards to adhere to. The particular configuration for a security software resource is determined based on the security requirements associated with a type of security facility for which the security software resource is selected. That is to say that a type of security facility 404 is identified for an application software resource 402 (e.g. with reference to Figure 4) having associated one or more security requirements 406. These security requirements 406 constitute the basis for determining a security configuration for a security software resource selected to implement a required security facility.

In one embodiment, the security configuration determiner 218 determines a security configuration for a security software resource from a supplier of the security software resource by way of a facility of such supplier whereby the supplier automatically generates a security configuration based on a specified security requirement. For example, a supplier can provide a service or function for converting a generic security requirement to a product-specific security configuration. Accordingly, in one embodiment the security configuration determiner 218 includes an interface (or employs the interface 204 which is suitably adapted) to communicate with such automated systems or services of suppliers of security software resources to request and receive a configuration of a security software resource on the basis of a supplied security requirement.

Further, the computer system 210 includes a deployment specification generator 220 as a software, hardware or firmware component adapted to generate a deployment specification 216 for a software application for deployment in the VCE 202. The deployment specification generator 220 generates a deployment specification 216 such as a deployment script, descriptor, or similar for the VCE 202 to assemble, install and configure resources required for the software application. For example, the deployment specification 216 can be a Puppet Script. In particular, the deployment specification 216 includes a specification of application software resources required to constitute the application, corresponding to the application software resources in the application resource set 214 of the application description 212. Additionally, the deployment specification 216 includes a specification of security software resources and configuration information therefor, determined by the security requirements determiner 206, the security software resource selector 208 and the security configuration determiner 218. Thus the deployment specification 216 is suitable for effecting the deployment, in or by the VCE 202, of the software application including required security software resources fully configured.

In one embodiment, the deployment specification 216 for the application is pre-existing, such as based on the description 212, or alternatively the description 212 also constitutes a deployment specification 216. In such an embodiment, the deployment specification generator 220 is configured to generate a deployment specification for security software resources, including configuration of the security software resources according to the configurations determined by the security configuration determiner 218. Further, in such an embodiment the deployment specification generator 220 can be configured to adapt, amend or modify a pre-existing deployment specification 216 with additional deployment information for security software resources, including configuration of those security software resources. For example, the deployment specification generator 220 can inject, insert, supplement, augment or otherwise amend, modify or adapt a pre-existing deployment specification 216 to include deployment and configuration information for security software resources.

In one embodiment, the interface 204 is adapted interface with the VCE 202 (not shown) to provide the deployment specification 216 to the VCE 202 in order that the VCE 202 can: instantiate the software application including application software resources and security software resources; and configure the security software resources in accordance with the security configuration determined by the security configuration determiner 218.

Thus, in use, the computer system 210 of Figure 2 provides a deployment specification 216 for a software application for deployment to a VCE 202. The deployment specification 216 includes deployment and configuration information for security software resources selected to implement security facilities required by software application components in a software application description 212. The required security facilities and associated security requirements are automatically determined based on the application description 212. Further, security software resources are automatically selected to satisfy the security requirements, for inclusion in the deployment specification 216. In this way a user specification, application description or deployment specification of a software application for deployment to a virtualised computing environment can be automatically supplemented to include appropriately configured security software resources without burdening the user, and with assurance of consistency of application of security software resources which satisfy user, organisational, VCE 202 or application requirements.

In one embodiment, the security requirement determiner 206 identifies a set of multiple types of security facility for an application, such as one or more types of security facility for each of multiple application software resources. In such an embodiment, a single type of security facility may appear multiple times in the set of types of security facility due to requirements for multiple application software resources. For example, in the arrangement of Figure 4 a virtual storage application software resource and a database application software resource both require an encryption type of security facility. Accordingly, in one embodiment the computer system 210 further includes a security facility optimiser (not shown) as a hardware, software or firmware component adapted to optimise the set of security facilities. The optimisation by the security facility optimiser can be by way of de-duplication of types of security facility, such as by removing duplicate types of security facility in the set and combination, aggregation or supplementation of security requirements from a removed duplicate type of security facility with security requirements for a remaining type of security facility. Additionally or alternatively optimisation can include consolidating two or more types of security facility by combining or aggregating security facilities. For example, where a first security facility implies a second security facility, removal of the second security facility and enhancement of the first (such as by way of new or amended security requirements) can constitute a consolidation of security facilities. By way of example, a whole-disk encryption security facility implies an encryption facility that may be suitable for database encryption. Where both a whole-disk encryption facility and a database encryption facility are determined by the security requirement determiner 206, such requirements can be consolidated to specify a generic encryption facility with security requirements for: whole-disk (storage appliance) encryption; and database encryption.

In a further embodiment, the security software resource selector 208 identifies a set of security software resources. In such an embodiment, a single security software resource may be selected multiple times corresponding to multiple (different or duplicate) types of security facility. For example, an encryption security software resource may be selected once for a network encryption function and a second time for a database encryption. Accordingly, in one embodiment the computer system 210 further includes a security software resource optimiser (not shown) as a hardware, software or firmware component adapted to optimise a set of selected security software resources. The optimisation by the security software resource optimiser can be by way of de-duplication of security software resources, such as by removing duplicate security software resources and combination, aggregation or supplementation of configurations of removed security software resources with a remaining security software resource. Additionally or alternatively optimisation can include consolidating two or more security software resources by combining or aggregating security software resources. For example, where a first security software resource provides a facility, function or service of a second security software resource, removal of the second security software resource and enhancement of the first (such as by way of new or amended configuration) can constitute a consolidation of security software resources.

In one embodiment the computer system 210 is a proxy deployed between a user specifying an application for deployment to the VCE 202 and an application definition facility as hereinbefore described. In such an embodiment the interface 204 provides for the interception of an application description 212 communicated between the user and the application definition facility. Further, in one embodiment, the user communicates with the computer system 210 as a proxy for the application definition facility via the interface 204, and the interface 204 forwards communication between the user and the application definition facility transparently therebetween such that the proxy is not apparent to either the user or the application definition facility. In one embodiment the proxy may be apparent to the user but is not apparent to the application definition facility.

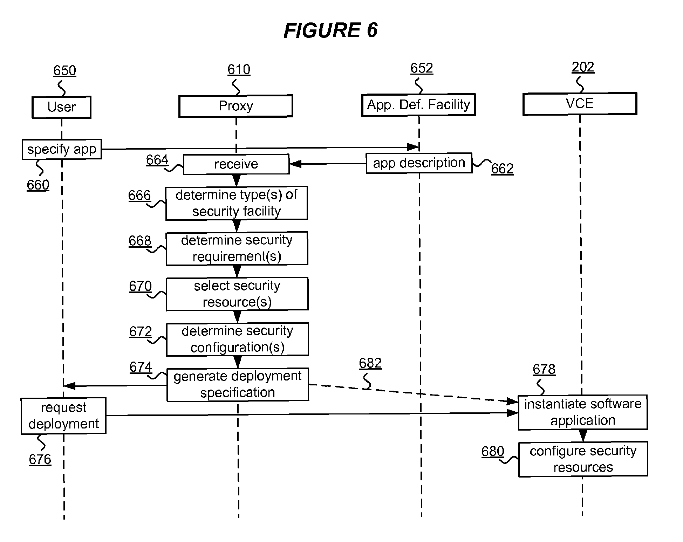

Figure 6 is a flow diagram illustrating a method of deploying a software application in a virtualised computing environment 202 in accordance with embodiments of the present invention. A user 650 initially specifies 660 an application for deployment to the VCE 202 by communicating with an application definition facility 652. The application definition facility generates, determines and/or retrieves 662 an application description 212 including an identification of a set of one or more application software resources required for the deployment of the application to the VCE 202. A proxy 610, such as a computer system 210 as hereinbefore described, receives 664 the application description 212, such as by way of intercepting or receiving as an intermediary between the user and the application definition facility 652. The proxy 610 determines 666 one or more types of security facility required for the set of application software resources. The proxy 610 further determines 668 a security requirement for each of the determined types of security facility. The proxy 610 subsequently selects 670 a security software resource for each of the determined types of security facility. The proxy 610 determines a security configuration for each of the selected security software resources based on a security requirement associated with a type of security facility for the security software resource. For example, the proxy determines 610 the security configuration of a selected security software resource by requesting a configuration from an automatic facility of a security software resource provider based on a supplied security requirement for the security software resource. The proxy 610 subsequently generates 674, modifies, augments or adapts a deployment specification for the application to include the selected security software resources and the application software resources, including a configuration for each security software resource. Subsequently, the user receives the deployment specification and requests 676 deployment of the application in the VCE 202. In an alternative embodiment, the proxy 610 directly requests deployment of the application in the VCE 202 (see alternative flow 682). The VCE 202 instantiates 678 the software application including all application software resources and all security software resources in accordance with the deployment specification. Subsequently the VCE 202 configures 680 the security software resources in accordance with the security configuration determined at step 672 and specified in the deployment specification.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of deploying a software application in a virtualised computing environment, the method comprising:
receiving a description of the software application including an identification of a set of one or more application software resources;
determining one or more types of security facility required for the set of application software resources and determining a security requirement for each of the determined types of security facility;
selecting a security software resource for each of the determined types of security facility;
determining a security configuration for each of the selected security software resources, the security configuration being based on a security requirement associated with a type of security facility for the security software resource; and
generating a deployment specification for the software application specifying the application software resources and the security software resources for deployment of the application in the virtualised computing environment, each of the security software resources having associated the determined security configuration.

2. The method of claim 1 wherein the method is performed by a proxy deployed between a user specifying the application and an application definition facility for a virtualised computing environment, the application definition facility providing the description of the software application, and wherein the receiving step comprises intercepting the description communicated between the application definition facility and the user.

3. The method of claim 2 wherein the application definition facility is an application designer for the virtualised computing environment, the application designer including a registry of selectable application components for the software application.

4. The method of any preceding claim wherein the one or more types of security facilities is a set of more than one types of security facility, and the method further comprises optimising the set of security facilities by de-duplicating the set of security facilities and/or consolidating two or more security facilities in the set of security facilities.

5. The method of any preceding claim wherein the security software resources for each of the determined types of security facility constitute a set of security software resources, and the method further comprises optimising the set of security software resources by de-duplicating the set of security software resources and/or consolidating two or more security software resources in the set of security software resources.

6. The method of any preceding claim wherein the security configuration for an identified security software resource is generated automatically by a security service provider for the security software resource based on the associated security requirement.

7. The method of any preceding claim further comprising providing the deployment specification to the virtualised computing environment to: a) instantiate the software application including the application software resources and the security software resources; and b) configure the security software resources in accordance with the security configuration determined for each of the security software resources.

8. A computer system arranged to deploy a software application in a virtualised computing environment comprising:
an interface, whereby a description of a software application for deployment in a virtualised computing environment is received, the description including an identification of a set of one or more application software resources;
a security requirement determiner arranged to determine one or more types of security facility required for the set of application software resources and to determine a security requirement for each of the determined types of security facility;
a security software resource selector arranged to select a security software resource for each of the determined types of security facility;
a security configuration determiner arranged to determine a security configuration for each of the selected security software resources, the security configuration being based on a security requirement associated with a type of security facility for the security software resource; and
a deployment specification generator arranged to generate a deployment specification for the software application specifying the application software resources and the security software resources for deployment of the application in the virtualised computing environment, each of the security software resources having associated the determined security configuration.

9. The computer system of claim 7 wherein the computer system is a proxy deployed between a user specifying the application and an application definition facility for a virtualised computing environment, the application definition facility providing the description of the software application, and wherein the interface is arranged to intercept the description communicated between the application definition facility and the user.

10. The computer system of claim 9 wherein the application definition facility is an application designer for the virtualised computing environment, the application designer including a registry of selectable application components for the software application.

11. The computer system of any of claims 8 to 10 wherein the one or more types of security facilities is a set of more than one types of security facility, and the computer system further comprises a security facility optimiser arranged to optimise the set of security facilities by de-duplicating the set of security facilities and/or consolidating two or more security facilities in the set of security facilities.

12. The computer system of any of claims 8 to 11 wherein the security software resources for each of the determined types of security facility constitute a set of security software resources, and the computer system further comprises a security software resource optimiser arranged to optimise the set of security software resources by de-duplicating the set of security software resources and/or consolidating two or more security software resources in the set of security software resources.

13. The computer system of any of claims 8 to 12 wherein the security configuration for an identified security software resource is generated automatically by a security service provider for the security software resource based on the associated security requirement.

14. The computer system of any of claims 8 to 13 wherein the interface is further arranged to provide the deployment specification to the virtualised computing environment to:
a) instantiate the software application including the application software resources and the security software resources; and b) configure the security software resources in accordance with the security configuration determined for each of the security software resources.

15. A computer system comprising a memory and a processor, the processor being arranged to perform the steps of:
receiving a description of a software application for deployment in a virtualised computing environment, the description including an identification of a set of one or more application software resources;
determining one or more types of security facility required for the set of application software resources and determining a security requirement for each of the determined types of security facility;
selecting a security software resource for each of the determined types of security facility;
determining a security configuration for each of the selected security software resources, the security configuration being based on a security requirement associated with a type of security facility for the security software resource;
generating a deployment specification for the software application specifying the application software resources and the security software resources for deployment of the application in the virtualised computing environment, each of the security software resources having associated the determined security configuration.

16. A computer program element comprising computer program code to, when loaded into a computer system and executed thereon, cause the computer to perform the steps of a method as claimed in any of claims 1 to 7.
